# EUROPÄISCHE PATENTSCHRIFT

(11) **EP 2 528 810 B1**
(45) Veröffentlichungstag und Bekanntmachung des Hinweises auf die Patenterteilung: **13.04.2016**
(21) Anmeldenummer: 11703367.0
(22) Anmeldetag: 28.01.2011
(51) Int. Cl.: B64C 21/10

(54) **STRUKTUR ZUR VERRINGERUNG EINES STRÖMUNGSWIDERSTANDS EINES KÖRPERS IN EINEM FLUID**
STRUCTURE FOR REDUCING A FLOW RESISTANCE OF A BODY IN A FLUID
STRUCTURE DESTINÉE À RÉDUIRE UNE RÉSISTANCE À L'ÉCOULEMENT D'UN CORPS DANS UN FLUIDE

(30) Priorität: 28.01.2010 CH 1002010
(43) Veröffentlichungstag der Anmeldung: 05.12.2012
(73) Patentinhaber: Feusi, Marco, 6934 Bioggio (CH)
(72) Erfinder: Feusi, Marco, 6934 Bioggio (CH)
(74) Vertreter: Hoffmann Eitle
(86) Internationale Anmeldenummer: PCT/CH2011/000010
(87) Internationale Veröffentlichungsnummer: WO 2011/091546

(56) Entgegenhaltungen:
- WO-A1-03/013957
- WO-A2-2007/066199
- GB-A- 2 178 131
- US-A- 2 899 150
- US-B1- 6 363 972

## Beschreibung

### Technisches Gebiet:

Die Erfindung betrifft einen Körper mit zumindest einer von einem Fluid überströmbaren Oberfläche mit einem globalen, eine Hauptströmungsrichtung über die Oberfläche definierenden Verlauf, wobei die Oberfläche zumindest teilweise eine Struktur zur Verringerung eines Strömungswiderstands des Körpers aufweist, wobei die Struktur zumindest eine mit einem im Wesentlichen kreisabschnittförmigen Querschnitt versehene Ausnehmung zur Induktion eines Fluidwirbels aufweist. Ferner betrifft die Erfindung eine Folie mit einer entsprechenden Oberflächenstruktur.

### Stand der Technik:

Im Flugzeugbau, aber beispielsweise auch im Schiffsbau oder bei der Konstruktion von Hochgeschwindigkeitszügen und Kraftfahrzeugen ist es von großer Bedeutung, eine möglichst widerstandsarme Form und auch eine möglichst widerstandsarme Oberfläche zu erhalten. Die Vorteile eines Flugzeugs, Schiffs oder Fahrzeugs mit guten Strömungseigenschaften, also niedrigem Strömungswiderstand, liegen einerseits in niedrigem Energiebedarf und damit Treibstoffverbrauch, andererseits können bei gleicher Antriebsleistüng höhere Geschwindigkeiten erreicht werden. Insgesamt bewegt sich ein Körper mit niedrigem Strömungswiderstand also effizienter durch ein Fluid wie z.B. Luft oder Wasser, was bei hohen Energiekosten besonders wichtig ist.

In der US 2,899,150 wird ein Flugzeugflügel beschrieben, der eine geringe Oberflächenreibung in Luft hat. Dabei werden kreisrunde Ausnehmungen in Rillenform über die Oberfläche des Flügels und quer zur Flug- und Strömungsrichtung vorgesehen.

In den Ausnehmungen entstehen dabei Luftwirbel, die zur Reduktion des Strömungswiderstands des Flügels beitragen.

In der US 6,363,972 wird dieser Gedanke weiter verfolgt und verschiedene Formen von Ausnehmungen in der Oberfläche eines Körpers vorgesehen, der von Luft überströmt wird.

Beide Strukturen haben jedoch den Nachteil eines noch unbefriedigend hohen Strömungswiderstands.

Insbesondere im Fall von strahlgetriebenen Luftfahrzeugen trägt der Strömungswiderstand im Inneren jedes Strahltriebwerks zum gesamten Strömungswiderstand des Luftfahrzeugs in besonderem Maße bei. Der Luftstrom im Inneren des Triebwerks wird teilweise auf Überschallgeschwindigkeit gebracht oder hat bereits, im Fall eines Überschallflugzustands, Überschallgeschwindigkeit. Hierbei können besondere, teilweise noch nicht verstandene Effekte der Hydrodynamik mit eintreten, die herkömmliche Strukturen zur Verringerung des Strömungswiderstands einer überströmten Oberfläche, wie die oben Genannten, weniger wirksam machen.

In der WO 03/013957 A1, die als nächstliegender Stand der Technik angesehen wird, wird ein Flügel beschrieben, in dessen Oberfläche eine Vertiefung vorgesehen ist, die eine Öffnung in Richtung einer äußeren Oberfläche hat. Die vordere Ecke und die hintere Ecke sind transversal zur Bewegungsrichtung des Profils angeordnet, wobei die vordere Ecke im Vergleich zur hinteren Ecke abgesenkt ist. Die Fläche die stromaufwärts vor der vorderen Ecke liegt, ist angeschrägt.

### Darstellung der Erfindung:

Die Aufgabe der Erfindung besteht also darin, den Strömungswiderstand eines Körpers in einem Fluid weiter zu verringern. Ferner besteht die Aufgabe darin, auch für Strömungszustände mit Geschwindigkeiten oberhalb der Schallgeschwindigkeit eine wirksame Verringerung des Strömungswiderstands des Körpers herbeizuführen.

Die Aufgabe wird durch den Gegenstand der Ansprüche 1, 15 und 16 gelöst. Vorteilhafte weitere Ausführungsformen werden durch die Unteransprüche gegeben. Gegenstand der Erfindung ist ein Körper mit zumindest einer von einem Fluid überströmbaren Oberfläche mit einem globalen, eine Hauptströmungsrichtung über die Oberfläche definierenden Verlauf, wobei die Oberfläche zumindest teilweise eine Struktur zur Verringerung eines Strömungswiderstands des Körpers aufweist. Dabei weist die Struktur zumindest eine mit einem im Wesentlichen kreisabschnittförmigen Querschnitt versehene Ausnehmung zur Induktion eines Fluidwirbels auf. Der Körper ist dadurch gekennzeichnet, dass die Struktur zumindest einen gegenüber der Hauptströmungsrichtung in Richtung der Ausnehmung geneigten und der Ausnehmung in der Hauptströmungsrichtung vorgelagerten Einleitungsabschnitt zum Einleiten eines Fluidstroms in der Ausnehmung aufweist. Dabei ist durch die Struktur ein Fluidwirbel innerhalb der Ausnehmung induzierbar und im Wesentlichen innerhalb der Ausnehmung lokalisierbar.

Der Körper hat also eine Oberfläche, die sich über einen größeren Bereich erstreckt. Dabei kann es sich sowohl um eine ebene als auch um eine gekrümmte Fläche handeln. Der globale Verlauf der Fläche definiert dabei gegebenenfalls je nach Anströmungsrichtung des Körpers eine Hauptströmungsrichtung eines Fluids über die Oberfläche, gewissermaßen eine gemittelte Strömungsrichtung. Kleine Strukturen auf der Oberfläche fallen dabei nur schwach ins Gewicht. Die Oberfläche des erfindungsgemäßen Körpers weist eine Struktur auf, die zumindest eine Ausnehmung mit einem im Wesentlichen kreisabschnittförmigen Querschnitt umfasst und zur Induktion eines Fluidwirbels geeignet und eingerichtet ist. Die Struktur umfasst ferner einen Einleitungsabschnitt, der zum Einleiten eines Fluidstroms in die Ausnehmung geeignet und eingerichtet ist. Dazu ist der Einleitungsabschnitt einerseits der Ausnehmung in Richtung der Hauptströmung vorgelagert, so dass ein die Oberfläche überströmender Fluidstrom zunächst den Einleitungsabschnitt passiert und sodann von diesem in die Ausnehmung eingeleitet wird. Andererseits ist der Einleitungsabschnitt gegenüber der Hauptströmungsrichtung in Richtung der Ausnehmung geneigt. Dies bedeutet, dass der Einleitungsabschnitt bei einer sich global horizontal erstreckenden Oberfläche in vertikaler Richtung auf die Ausnehmung zu geneigt ist. Dies hat zur Folge, dass ein Teil des die Oberfläche überströmenden, den Einleitungsabschnitt passierenden Fluidstroms durch den Einleitungsabschnitt in die Ausnehmung hinein geleitet wird. In der Ausnehmung wird durch die Gestalt der Ausnehmung und durch den Fluidstrom ein Fluidwirbel erzeugt, der wegen der Gestalt der Ausnehmung im Wesentlichen innerhalb der Ausnehmung verbleibt.

Der Durchmesser des im Wesentlichen kreisabschnittförmigen Querschnitts der Ausnehmung kann dabei bevorzugt 8 mm für Luft, die mit 100 km/h (etwa 27,8 m/s) über die Oberfläche strömt, betragen. Der bevorzugte Durchmesser steigt dabei linear mit der zu erwartenden Strömungsgeschwindigkeit von Luft an. Im Fall von Wasser als Fluid beträgt der Durchmesser im Querschnitts der Ausnehmung bevorzugt 8 mm für Wasser, das mit 6 km/h (etwa 1,7 m/s) über die Oberfläche strömt. Das bedeutet, dass die Dimension der Ausnehmung abhängig von der Art des zu erwartenden Fluidstroms ist. Eine empirische Formel für die Dimensionierung der Ausnehmung bei Gasen lautet d=8*v/1000, wobei d den Durchmesser der Ausnehmung in Zentimetern und v die Geschwindigkeit des Fluidstroms in km/h bezeichnen. Die Oberfläche in der Ausnehmung ist bevorzugt mit TiO₂ beschichtet, wodurch ein besonders geringer Strömungswiderstand zwischen dem in der Ausnehmung lokalisierten Fluidwirbel und dem Rand der Ausnehmung erreicht wird. Die Ausnehmung kann auch einen von einer Kreisform abweichenden Querschnitt haben.

Das bedeutet, dass ein Teil des Fluidstroms, der unmittelbar über die Oberfläche strömt, durch den Einleitungsabschnitt und die Ausnehmung zuverlässig und effizient in einen Fluidwirbel (Helmholtzwirbel) umgewandelt wird, der im Wesentlichen innerhalb der Ausnehmung verbleibt. Dass der Fluidwirbel im Wesentlichen innerhalb der Ausnehmung verbleibt bedeutet, dass der größte Teil der in der Ausnehmung befindlichen Teilchen des Fluids innerhalb der Ausnehmung in einem stationären Wirbel verbleiben, also nicht aus der Ausnehmung herausgeleitet werden.

Durch den in der Ausnehmung lokalisierten Fluidwirbel werden Fluidteilchen bei einem anhaltenden Fluidstrom über den Fluidwirbel hinweg geleitet. Da der Fluidwirbel eine Rotationsgeschwindigkeit hat, ist die Geschwindigkeitsdifferenz zwischen dem äußeren Rand des Fluidwirbels und dem unmittelbar über den Fluidwirbel geleiteten Fluidstrom sehr klein, so dass der Strömungswiderstand des Körpers, der proportional zur Überströmungsgeschwindigkeit anwächst, ebenfalls sehr klein gehalten werden kann. Im Bereich des Fluidwirbels gerät der die Oberfläche überströmende Fluidstrom also nicht in direkten Kontakt mit dem (ruhenden) Körper, sondern nur mit dem Außenrand des Wirbels. Durch den Einleitungsabschnitt ist darüber hinaus eine effektive Verringerung des Strömungswiderstands auch für Überschallgeschwindigkeiten des Fluidstroms möglich.

In einer bevorzugten Ausführungsform ist die Ausnehmung im Wesentlichen quer zur Hauptströmungsrichtung ausgedehnt, insbesondere rillenförmig. Wenn sich die Ausnehmung quer zur Hauptströmungsrichtung über den Körper erstreckt, ist die Wirkung der Oberflächenstruktur am größten. Eine Winkelabweichung von bis zu 45° von der Senkrechten zur Hauptströmungsrichtung ermöglicht dabei immer noch eine deutliche Verringerung des Strömungswiderstands gegenüber bekannten Strukturen. Bei einer besonders bevorzugten rillenförmigen Ausführungsform der Struktur erstreckt sich die Ausnehmung in Querrichtung zur Hauptströmungsrichtung über die ganze Oberfläche.

Mit Vorteil weist die Struktur eine Mehrzahl der Ausnehmungen auf, wobei die Ausnehmungen der Mehrzahl insbesondere in der Hauptströmungsrichtung hintereinander liegend angeordnet sind. Die Struktur ist besonders wirksam, wenn viele in Hauptströmungsrichtung hintereinander liegende Ausnehmungen auf der Oberfläche des Körpers vorhanden sind. Dadurch kann eine große Fläche des Körpers mit der Struktur versehen werden und eine besonders wirkungsvolle Verringerung des Strömungswiderstands ist daher möglich. In diesem Fall treffen nachfolgende Teilchen des Fluidstroms, der über die Oberfläche des Körpers strömt, kaum auf die Oberfläche des Körpers selbst, sondern werden nahezu vollständig durch die Fluidwirbel über die Oberfläche weg geleitet. Dabei ist die Geschwindigkeitsdifferenz zwischen der Fluidstromschicht, die der Oberfläche am nächsten ist, und jedem der Fluidwirbel sehr klein und der Strömungswiderstand damit auch.

Im Fall mehrerer Ausnehmungen ist besonders vorteilhaft, wenn benachbarte Ausnehmungen um das 1-fache bis 6-fache, insbesondere das 1,1-fache bis 1,75-fache, bevorzugt das 1,25-fache bis 1,5-fache und besonders bevorzugt das 1,25-fache des Durchmessers des kreisabschnittförmigen Querschnitts voneinander beabstandet sind. Der Abstand zwischen den Ausnehmungen wird dabei jeweils zwischen den Mittelpunkten benachbarter Ausnehmungen bestimmt. Durch einen so bemessenen Abstand zwischen den Ausnehmungen, bevorzugt in Richtung der Hauptströmungsrichtung, wird eine besonders große Reduktion des Strömungswiderstands des Körpers erreicht.

Mit Vorteil ist der Einleitungsabschnitt gekrümmt ausgeführt. Dabei misst der Krümmungsradius bevorzugt das 1,1-fache bis 1,75-fache, insbesondere das 1,25-fache bis 1,5-fache und besonders bevorzugt das 1,25-fache des Durchmessers des kreisabschnittförmigen Querschnitts, wobei es auch von Vorteil sein kann, wenn er das 2-fache bis 6-fache des Durchmessers des kreisabschnittförmigen Querschnitts misst. Durch eine solche Krümmung wird der unmittelbar über die Oberfläche des Körpers strömende Fluidstrom besonders reibungsarm und sicher in die Ausnehmung geleitet.

Bevorzugt ist der Einleitungsabschnitt derart ausgebildet, dass die Neigung zwischen der Hauptströmungsrichtung und der zur Hauptströmungsrichtung parallelen Tangente an einer ersten Stelle des Einleitungsabschnitts größer ist als an einer zweiten Stelle, die gegenüber der ersten Stelle in der Hauptströmungsrichtung stromaufwärts gelegen ist. Das bedeutet, dass die Neigung des Einleitungsabschnitts zur Hauptströmungsrichtung in Richtung der Strömung zunimmt. Dies muss nicht unbedingt kontinuierlich geschehen, es kann auch diskrete Abschnitte des Einleitungsabschnitts geben, die unterschiedlich gegenüber der Hauptströmungsrichtung geneigt sind, wobei die Neigung von Abschnitt zu Abschnitt zunimmt.

In einer weiteren bevorzugten Ausführungsform weist die Ausnehmung eine in der Hauptströmungsrichtung stromaufwärts gelegene erste Kante zwischen dem Einleitungsabschnitt und der Ausnehmung und eine stromabwärts gelegene zweite Kante zwischen der Ausnehmung und einem stromabwärts gelegenen Teil der Oberfläche auf. Dabei ist die erste Kante gegenüber der zweiten Kante im Wesentlichen in Richtung des Inneren des Körpers versetzt, um den Fluidwirbel in der Ausnehmung zu induzieren. In diesem Zusammenhang ist eine Kante als eine abrupte Änderung der Oberflächenausrichtung zu verstehen. Sie ist an den Übergängen zwischen jeder Ausnehmung und den sie umgebenden Teilen der Oberfläche vorhanden. Dass die erste Kante gegenüber der zweiten Kante im Wesentlichen in Richtung des Inneren des Körpers versetzt ist, bedeutet umgekehrt, dass die zweite Kante gegenüber der ersten Kante von der Ausnehmung weg gewissermaßen hervorsteht. Die zweite Kante ist daher ein weiteres Element, das ein Einleiten eines Fluidstroms in die Ausnehmung erleichtert und die Struktur besonders auch für die Reduktion eines Strömungswiderstands bei Überschallströmungen auszeichnet.

Mit Vorteil ist dabei die am weitesten stromaufwärts gelegene Stelle der Ausnehmung, d.h. des Rands der Ausnehmung, gegenüber der ersten Kante in Richtung des Inneren des Körpers versetzt, um den Fluidwirbel im Wesentlichen innerhalb der Ausnehmung zu lokalisieren. Die am weitesten stromaufwärts gelegene Stelle der Ausnehmung befindet sich unterhalb der ersten Kante. Dabei ist die Stelle des Rands der Ausnehmung gemeint, von der aus sich ein dem Rand der Ausnehmung folgender Fluidstrom stets (teilweise) stromabwärts, also in Richtung der Hauptströmungsrichtung, bewegt. Bei einem kreisabschnittförmigen Querschnitt der Ausnehmung ist diese Stelle typischerweise eine Stelle, mit senkrecht zur Hauptströmungsrichtung verlaufender Tangente an den Rand der Ausnehmung. Das bedeutet, dass sich ein Fluidteilchen des Fluidwirbels innerhalb der Ausnehmung an der ersten Kante zumindest teilweise in Richtung der Hauptströmungsrichtung bewegt. Hiermit ist eine sichere Lokalisierung des Fluidwirbels im Wesentlichen innerhalb der Ausnehmung verbunden.

In einer bevorzugten Ausführungsform ist die zweite Kante gegenüber einer Mittelstelle der Ausnehmung um das 0,1-fache bis 0,6-fache oder um das 0,1-fache bis 0,5-fache, bevorzugt um das 0,25-fache und besonders bevorzugt um das 0,3-fache des Radius des kreisabschnittförmigen Querschnitts in der Hauptströmungsrichtung versetzt. Diese Anordnung der zweiten Kante relativ zur kreisabschnittförmigen Ausnehmung, genauer relativ zu deren Mittelstelle, also der Stelle des Mittelpunkts des den Querschnitt definierenden Kreises, erlaubt wiederum eine besonders effektive Reduktion des Strömungswiderstands der Oberfläche. Dies hängt einerseits mit einer sicheren Lokalisierung des Wirbels im Innern der entsprechenden Ausnehmung, andererseits auch mit einer effektiven Einleitung des Fluids in die Ausnehmung im Zusammenwirken mit dem Einleitungsabschnitt zusammen.

Mit Vorteil weist die zweite Kante einen sich entgegen der Hauptströmungsrichtung und in Richtung der Ausnehmung geneigten Vorsprung zum Überleiten des Fluidwirbels zu einer nachfolgenden Ausnehmung auf. Ein solcher Vorsprung zwingt den Fluidwirbel dazu, innerhalb der Ausnehmung zu verbleiben, so dass die Fluidteilchen des Fluidwirbels in der Ausnehmung bleiben und nicht aus der Ausnehmung heraus geleitet werden. Da durch die Strömung des Fluids über die Oberfläche des Körpers zusätzliche Fluidteilchen in die Ausnehmung gelangen, steigt bei einem kompressiblen Fluid, wie etwa Luft, der Innendruck des Fluidwirbels, auf Grund dessen sich der Fluidwirbel ausdehnt. Somit wird sich ein Teil des Fluidwirbels über die zweite Kante ausdehnen und durch den geneigten Vorsprung, der bevorzugt um einen Winkel von 10° bis 20°, besonders bevorzugt um 17° gegenüber der Hauptströmungsrichtung geneigt ist, zu einer in Strömungsrichtung nachfolgenden Ausnehmung geleitet wird. Somit entsteht ein sich entlang der Hauptströmungsrichtung von Ausnehmung zu Ausnehmung erstreckendes Luftpolster, dass eine effiziente Reibungsreduktion ermöglicht.

Mit Vorteil misst der Kreisbogenabschnitt des Querschnitts der Ausnehmung zwischen 270° und 310°, bevorzugt zwischen 280° und 300°, besonders bevorzugt 290°, so dass die Ausnehmung über einen Winkelbereich von zwischen 90° und 50°, bevorzugt von zwischen 80° und 60°, besonders bevorzugt von 70° ihres Querschnitts geöffnet ist. Es kann jedoch auch vorteilhaft sein, wenn der Kreisbogenabschnitt des Querschnitts der Ausnehmung zwischen 181° und 315°, insbesondere zwischen 260° und 290° misst, so dass die Ausnehmung über einen Winkelbereich von zwischen 179° und 45°, insbesondere von zwischen 100° und 75° ihres Querschnitts geöffnet ist. Dabei ist der Winkelbereich der Öffnung ebenfalls von der zu erwartenden Geschwindigkeit des Fluidstroms abhängig. Eine entsprechend dimensionierte Öffnung der Ausnehmung dient wiederum einer besonders effizienten Reduktion des Strömungswiderstands der Oberfläche und damit des Körpers, der von dem Fluid über- oder umströmt wird.

Ein erfindungsgemäßer Strömungskanal, insbesondere ein Überschallströmungskanal, umfasst einen oben beschriebenen Körper. Dadurch ist ein besonders reibungsarmer Fluidstrom durch den Strömungskanal gewährleistet. Insbesondere kann es sich bei dem Strömungskanal um das Innere eines Strahltriebwerks handeln, in dem zumindest teilweise ein Fluidstrom mit Überschallgeschwindigkeit vorliegen kann. Ein erfindungsgemäßes Strahltriebwerk sowie eine erfindungsgemäße Auftriebsvorrichtung sind ebenfalls mit einem oben beschriebenen Körper versehen. Bevorzugt weisen die Auftriebsvorrichtung, der Strömungskanal oder das Strahltriebwerk dabei eine fluidüberströmte Oberfläche auf, die im Wesentlichen vollständig mit der oben beschriebenen Struktur versehen ist.

Gemäß einem weiteren Aspekt der Erfindung umfasst eine Folie eine Struktur zur Verringerung eines Strömungswiderstands eines von einem Fluid in einer Hauptströmungsrichtung überströmbaren oder umströmbaren Körpers, auf dessen Oberfläche die Folie aufbringbar ist. Dabei weist die Struktur zumindest eine mit einem im Wesentlichen kreisabschnittförmigen Querschnitt versehene Ausnehmung zur Induktion eines Fluidwirbels auf. Die Folie ist dabei dadurch gekennzeichnet, dass die Struktur zumindest einen gegenüber der Hauptströmungsrichtung in Richtung der Ausnehmung geneigten und der Ausnehmung in der Hauptströmungsrichtung vorgelagerten Einleitungsabschnitt zum Einleiten eines Fluidstroms in die Ausnehmung aufweist. Dabei ist durch die Struktur ein Fluidwirbel innerhalb der Ausnehmung induzierbar, und im Wesentlichen innerhalb der Ausnehmung lokalisierbar. Eine erfindungsgemäße Folie ist also dazu geeignet, einen erfindungsgemäßen Körper durch Beschichten einer Oberfläche eines nahezu beliebigen Körpers mit der Folie zu erstellen.

Ein weiterer Aspekt der Erfindung liegt in der Verwendung einer von einem Fluid in einer Hauptströmungsrichtung überströmbaren Oberflächenstruktur mit zumindest einer mit einem im Wesentlichen kreisabschnittförmigen Querschnitt versehenen Ausnehmung zur Induktion eines Fluidwirbels, die einen gegenüber der Hauptströmungsrichtung geneigten und der Ausnehmung in der Hauptströmungsrichtung vorgelagerten Einleitungsabschnitt zum Einleiten eines Fluidstroms in die Ausnehmung aufweist, zum Verringern eines Strömungswiderstands eines mit der Oberflächenstruktur versehenen Körpers.

Weitere bevorzugte Ausführungsformen ergeben sich aus der nachfolgenden Figurenbeschreibung sowie der Gesamtheit der Ansprüche.

### Kurze Figurenbeschreibung:

Fig. 1 zeigt in einer Seiten-Schnittansicht einen Ausschnitt eines Körpers mit einer Oberflächenstruktur gemäß einer bevorzugten Ausführungsform.
Fig. 2 zeigt in einer Seiten-Schnittansicht einen Ausschnitt eines Körpers mit einer Oberflächenstruktur gemäß einer weiteren bevorzugten Ausführungsform.

### Bevorzugte Ausführungsform:

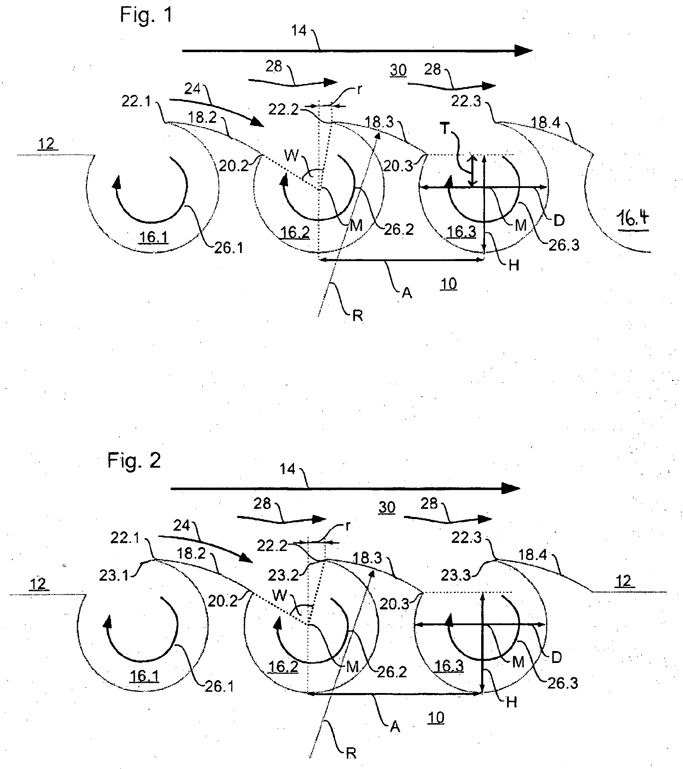

Fig. 1 zeigt eine Seiten-Schnittansicht eines Körpers 10 entlang einer Oberfläche 12 des Körpers 10, die von einem Fluid 30 überströmt wird. Die Oberfläche 12 weist vier nebeneinander liegende, Ausnehmungen 16.1...16.4 auf, die einen kreisabschnittförmigen Querschnitt haben und vorzugsweise eine Oberfläche aus Titandioxid oder eine andere weitgehend inerte und/oder reibungsvermindernde Oberfläche haben, wobei die Ausnehmung 16.4 nur teilweise gezeichnet ist. Die vier Ausnehmungen 16.1...16.4 sind dabei um das 1,25-fache des Durchmessers D des Kreises, der den Querschnitt der Ausnehmungen definiert, voneinander beabstandet. Zwischen den Ausnehmungen 16.1 und 16.2 ist ein Einleitungsabschnitt 18.2 der Ausnehmung 16.2, zwischen den Ausnehmungen 16.2 und 16.3 ein Einleitungsabschnitt 18.3 der Ausnehmung 16.3 und zwischen den Ausnehmungen 16.3 und 16.4 ein Einleitungsabschnitt 18.4 vorgesehen. Die Struktur der Ausnehmungen mit ihren Merkmalen setzt sich in Richtung der Hauptströmungsrichtung periodisch fort. Die Beschreibung der Figuren bezieht sich jeweils auf einen Ausschnitt der gesamten Struktur. Insbesondere bei der nur teilweise dargestellten Ausnehmung 16.4 gelten die beschriebenen Eigenschaften analog, auch wenn dies nicht explizit erwähnt wird.

Die Schnittebene der Fig. 1 verläuft dabei entlang einer Hauptströmungsrichtung 14 des Fluids 30 oberhalb der Oberfläche 12 des Körpers 10. Die Ausnehmungen 16.1...16.4 sind also entlang der Hauptströmungsrichtung 14 voneinander gleichmäßig beabstandet und erstrecken sich im Wesentlichen quer zur Hauptströmungsrichtung 14, aus der Zeichenebene der Fig. 1 heraus bzw. in sie hinein. Der Abstand A der Ausnehmungen 16.1...16.4 voneinander, d.h. der Abstand zwischen den Mittelpunkten benachbarter Ausnehmungen 16.1...16.4 beträgt in dieser bevorzugten Ausführungsform das 1,25-fache des Durchmessers D jeder der Ausnehmungen 16.1...16.4. Die zwischen benachbarten Ausnehmungen 16.1...16.4 vorhandenen Einleitungsabschnitte 18.2...18.4 sind in der in Fig. 1 gezeigten bevorzugten Ausführungsform in Richtung der dazu gehörigen Ausnehmungen 16.2...16.4 gekrümmt. Dabei ist die Krümmung jeweils so bemessen, dass sie einen Krümmungsradius R vom 1,25-fachen bzw. vom 1,5-fachen im Fall der Ausführungsform, die in Fig. 2 gezeigt ist, des Durchmessers D der Ausnehmungen 16.2...16.4 hat.

Die Ausnehmungen 16.2 und 16.3 weisen jeweils eine Öffnung auf, die jeweils durch eine erste Kante 20.2...20.3 und eine zweite Kante 22.2...22.3 in Hauptströmungsrichtung 14 begrenzt sind. Die Kanten 20.2, 20.3, 22.2, 22.3 definieren somit auch einen Winkelbereich W, der als Öffnungswinkel bezeichnet werden kann und am Beispiel der Ausnehmung 16.2 gezeigt ist, über den sich die jeweilige Öffnung einer Ausnehmung erstreckt. Die Höhe H der ersten Kanten 20.2...20.3 über der tiefsten Stelle der jeweiligen Ausnehmung 16.2...16.3 beträgt in der in Fig. 1 gezeigten bevorzugten Ausführungsform das 0,75-fache des Durchmessers D der entsprechenden Ausnehmung. Die zweiten Kanten 22.2...22.3 sind jeweils gegenüber den ersten Kanten 20.2...20.3 in der Höhenrichtung, also vom Körper 10 weg weisend, versetzt. Gegenüber der Stelle des Mittelpunkts M jeder Ausnehmung in Richtung der Hauptströmungsrichtung 14 ist die zweite Kante um eine Tiefe T vom 0,25-fachen des Durchmessers D der entsprechenden Ausnehmung versetzt.

Ein die Oberfläche 12 überströmendes Fluid 30, dessen Hauptströmungsrichtung 14 durch den globalen Verlauf der Oberfläche 12 definiert ist, gelangt in seinem unmittelbar an die Oberfläche 12 anliegenden Bereich auf die Einleitungsabschnitte 18.2...18.3. Die Einleitungsabschnitte 18.2...18.3 leiten einen Teilstrom 24 des Fluids 30 in die Ausnehmungen 16.2...16.3, wo durch die Kreisform des Querschnitts der Ausnehmungen 16.2...16.3 ein Fluidwirbel 26.1...26.3 induziert wird. Die zweiten Kanten 22.1...22.3 teilen dabei den in die Ausnehmung eingeleiteten Fluidstrom 24 von einem weiterströmenden Fluidstrom 28, der über die zweiten Kanten 22.1...22.3 der Ausnehmungen 16.1...16.3 hinweg geleitet wird. Der weiterströmende Fluidstrom 28 und alle darüber liegenden Schichten werden durch die Fluidwirbel 26.1...26.3 in den Ausnehmungen 16.1...16.3 mit einem sehr niedrigen Strömungswiderstand über die Oberfläche 12 des Körpers 10 geleitet.

Die Fluidwirbel 26.1...26.3 in den Ausnehmungen 16.1...16.3 werden durch das strömende Fluid 30 permanent angetrieben und bleiben so lange bestehen, wie das Fluid 30 über die Oberfläche 12 des Körpers 10 strömt. Durch die hohe Rotationsgeschwindigkeit der Wirbel 26.1...26.3 entsteht eine nur minimale Geschwindigkeitsdifferenz zwischen dem weiterströmenden Fluidstrom 28 und dem Fluidwirbel 26.1...26.3. Durch die minimale Geschwindigkeitsdifferenz entsteht kaum Strömungswiderstand im Bereich der Fluidwirbel.

Die Fluidwirbel bilden darüber hinaus "Luftkissen", über die der weiterströmende Fluidstrom 28 geleitet wird und durch die der Fluidstrom 28 nicht oder nur kaum in direkten Kontakt mit der Oberfläche 12 des Körpers 10 selbst kommt.

Fig. 2 zeigt eine weitere Ausführungsform, in der die zweite Kante 22.1...22.3 mit einem sich entgegen der Strömungsrichtung erstreckenden, in Richtung der Ausnehmung geneigten Vorsprung 23.1...23.3. Die zweite bevorzugte Ausführungsform entspricht der in Fig. 1 gezeigten.

## Patentansprüche

1. Körper (10) mit zumindest einer von einem Fluid (30) überströmbaren Oberfläche (12) mit einem globalen, eine Hauptströmungsrichtung (14) über die Oberfläche (12) definierenden Verlauf,
wobei die Oberfläche (12) zumindest teilweise eine Struktur zur Verringerung eines Strömungswiderstands des Körpers (10) aufweist, wobei die Struktur
zumindest eine Ausnehmung (16.1...16.3) zur Induktion eines Fluidwirbels (26.1...26.3) und
zumindest einen gegenüber der Hauptströmungsrichtung in Richtung der Ausnehmung (16.1...16.3) geneigten und
der Ausnehmung (16.1...16.3) in der Hauptströmungsrichtung vorgelagerten Einleitungsabschnitt (18.1...18.3) zum Einleiten eines Fluidstroms (24) in die Ausnehmung (16.1...16.3) aufweist,
**dadurch gekennzeichnet,**
**dass** die Ausnehmung (16.1...16.3) einem kreisabschnittförmigen Querschnitt aufweist und so ausgebildet ist, dass durch ein über die Oberfläche (12) geleiteter Fluidstrom (14) ein Fluidwirbel (26.1...26.3) innerhalb der Ausnehmung (16.1...16.3) induziert ist, welche Ausnehmung so gestaltet ist, dass der Fluidwirbel im Wesentlichen innerhalb der Ausnehmung verbleibt und Luftkissen bildet, über die der weiterströmende Fluidstrom (28) geleitet wird.

2. Körper (10) nach Anspruch 1, wobei die Ausnehmung (16.1...16.3) im Wesentlichen quer zur Hauptströmungsrichtung (14) ausgedehnt, insbesondere rillenförmig ist.

3. Körper (10) nach Anspruch 1 oder 2, wobei die Struktur eine Mehrzahl der Ausnehmungen (16.1...16.3) aufweist, wobei die Ausnehmungen (16.1...16.3) der Mehrzahl insbesondere in der Hauptströmungsrichtung (14) hintereinander liegend angeordnet sind.

4. Körper (10) nach Anspruch 3, wobei benachbarte Ausnehmungen (16.1, 16.2; 16.2, 16.3) bevorzugt um das 1-fache bis 6-fache, je nach Dichte, Viskosität und Temperatur des Fluids, des Durchmessers (D) des kreisabschnittförmigen Querschnitts voneinander beabstandet sind.

5. Körper (10) nach einem der vorstehenden Ansprüche, wobei der Einleitungsabschnitt (18.1...18.3) geradlinig und/oder gekrümmt ausgeführt ist, wobei insbesondere der Krümmungsradius (R), je nach Dichte, Viskosität und Temperatur des Fluids, das 2-fache bis 6-fache, des Durchmessers (D) des kreisabschnittförmigen Querschnitts misst.

6. Körper (10) nach einem der vorstehenden Ansprüche, wobei der Einleitungsabschnitt (18.1...18.3) derart ausgebildet ist, dass die Neigung zwischen der Hauptströmungsrichtung (14) und der zur Hauptströmungsrichtung parallelen Tangente an einer ersten Stelle des Einleitungsabschnitts größer ist als an einer zweiten Stelle, die gegenüber der ersten Stelle in der Hauptströmungsrichtung stromaufwärts gelegen ist.

7. Körper (10) nach einem der vorstehenden Ansprüche, wobei die Ausnehmung (16.2...16.3) eine in der Hauptströmungsrichtung (14) stromaufwärts gelegene erste Kante (20.2... 20.3) zwischen dem Einleitungsabschnitt (18.2...18.3) und der Ausnehmung (16.2...16.3) und eine in der Hauptströmungsrichtung stromabwärts gelegene zweite Kante (22.2...22.3) zwischen der Ausnehmung (16.2...16.3) und einem stromabwärts gelegenen Teil der Oberfläche aufweist, wobei die erste Kante (20.2... 20.3) gegenüber der zweiten Kante (22.2...22.3) im Wesentlichen in Richtung des Inneren des Körpers (10) versetzt ist, um den Fluidwirbel (26.2...26.3) in der Ausnehmung (16.2...16.3) zu induzieren.

8. Körper (10) nach Anspruch 7, wobei die am weitesten stromaufwärts gelegene Stelle der Ausnehmung (16.2...16.3) gegenüber der ersten Kante (20.2...20.3) in Richtung des Inneren des Körpers (10) versetzt ist, um den Fluidwirbel (26.2...26.3) im Wesentlichen innerhalb der Ausnehmung (16.2...16.3) zu lokalisieren.

9. Körper (10) nach Anspruch 7 oder 8, wobei die zweite Kante (22.2...22.3) gegenüber einer Mittelstelle (M) der Ausnehmung (16.2...16.3) um das 0,1-fache bis 0,6-fache, bevorzugt um das 0,3-fache des Radius des kreisabschnittförmigen Querschnitts in Hauptströmungsrichtung versetzt ist.

10. Körper (10) nach Anspruch 3 und einem der Ansprüche 7 bis 9, wobei die zweite Kante (22.2...22.3) einen sich entgegen der Hauptströmungsrichtung und in Richtung der Ausnehmung geneigten Vorsprung (23.2...23.3) zum Überleiten des Fluidwirbels zu einer nachfolgenden Ausnehmung aufweist.

11. Körper (10) nach einem der vorstehenden Ansprüche, wobei der Kreisbogenabschnitt des Querschnitts der Ausnehmung (16.2...16.3), je nach Dichte, Viskosität und Temperatur des Fluids, zwischen 181° und 315°, bevorzugt zwischen 260° und 310°, und besonders bevorzugt zwischen 270° und 310°, misst,
so dass die Ausnehmung (16.2...16.3) über einen Winkelbereich von zwischen 179° und 45°, bevorzugt von zwischen 100° und 75° ihres Querschnitts geöffnet ist.

12. Strömungskanal, insbesondere Überschallströmungskanal, mit einem Körper (10) nach einem der Ansprüche 1 bis 11.

13. Strahltriebwerk mit einem Körper (10) nach einem der Ansprüche 1 bis 11.

14. Auftriebsvorrichtung mit einem Körper (10) nach einem der Ansprüche 1 bis 11.

15. Folie mit einer Struktur zur Verringerung eines Strömungswiderstands eines von einem Fluid in einer Hauptströmungsrichtung (14) überströmbaren oder umströmbaren Körpers, auf dessen Oberfläche die Folie aufbringbar ist, wobei die Struktur
zumindest eine Ausnehmung (16.1...16.3) zur Induktion eines Fluidwirbels (26.1...26.3) aufweist, und
zumindest einen gegenüber der Hauptströmungsrichtung (14) in Richtung der Ausnehmung (16.1...16.3) geneigten und der Ausnehmung (16.1...16.3) in der Hauptströmungsrichtung (14) vorgelagerten Einleitungsabschnitt (18.1...18.3) zum Einleiten eines Fluidstroms (24) in die Ausnehmung (16.1...16.3) aufweist,
**dadurch gekennzeichnet,**
**dass** die Ausnehmung (16.1...16.3) einen kreisabschnittförmigen Querschnitt aufweist und so ausgebildet ist, dass
durch ein über die Oberfläche (12) geleiteter Fluidstrom (14) ein Fluidwirbel (26.1...26.3) innerhalb der Ausnehmung (16.1...16.3) induziert ist, welche Ausnehmung so gestaltet ist, dass der Fluidwirbel im Wesentlichen innerhalb der Ausnehmung verbleibt und Luftkissen bildet, über die der weiterströmende Fluidstrom (28) geleitet wird.

16. Verwendung einer von einem Fluid in einer Hauptströmungsrichtung überströmbaren Oberflächenstruktur mit zumindest Ausnehmung (16.1...16.3) zur Induktion eines Fluidwirbels (26.1...26.3), die einen gegenüber der Hauptströmungsrichtung geneigten und der Ausnehmung in der Hauptströmungsrichtung vorgelagerten Einleitungsabschnitt (18.1...18.3) zum Einleiten eines Fluidstroms in die Ausnehmung (16.1...16.3) aufweist,
**dadurch gekennzeichnet,**
**dass** eine Oberflächenstruktur mit einer versehenen Ausnehmung eines kreisabschnittförmigen Querschnitts eingesetzt wird, zum Verringern eines Strömungswiederstands eines mit der Oberflächenstruktur versehenen Körpers, wobei die Ausnehmung so ausgebildet ist, dass durch ein über die Oberfläche (12) geleiteter Fluidstrom (14) ein Fluidwirbel (26.1...26.3) innerhalb der Ausnehmung (16.1...16.3) induziert ist, welche Ausnehmung so gestaltet ist, dass der Fluidwirbel im Wesentlichen innerhalb der Ausnehmung verbleibt und Luftkissen bildet, über die der weiterströmende Fluidstrom (28) geleitet wird.

## Claims

1. Body (10) having at least one surface (12) over which a fluid (30) can flow, having a global course defining a main flow direction (14) over the surface (12), wherein the surface (12) has at least partly a structure for reducing a flow resistance of the body (10), wherein the structure has at least one recess (16.1...16.3) for the induction of a fluid vortex (26.1...26.3) and at least one introduction section (18.1...18.3) inclined with respect to the main flow direction in the direction of the recess (16.1...16.3) and upstream of the recess (16.1...16.3) in the main flow direction to introduce a fluid stream (24) into the recess (16.1...16.3), **characterised in that** the recess (16.1...16.3) has a circle segment-like cross-section and is designed so that a fluid vortex (26.1...26.3) is induced within the recess (16.1...16.3) by a fluid stream (14) passed over the surface (12), which recess is designed so that the fluid vortex remains essentially within the recess and forms air cushions, over which the further-flowing fluid stream (28) is passed.

2. Body (10) according to claim 1, wherein the recess (16.1...16.3) extends essentially transversely to the main flow direction (14), in particular is like a channel.

3. Body (10) according to claim 1 or 2, wherein the structure has a plurality of recesses (16.1...16.3), wherein the recesses (16.1...16.3) of the plurality are arranged lying one behind another in particular in the main flow direction (14).

4. Body (10) according to claim 3, wherein adjacent recesses (16.1, 16.2; 16.2, 16.3) are spaced from one another, depending on density, viscosity and temperature of the fluid, preferably by 1 times to 6 times the diameter (D) of the circle segment-like cross-section.

5. Body (10) according to one of the preceding claims, wherein the introduction section (18.1...18.3) is designed to be straight-lined and/or curved, wherein in particular the radius of curvature (R), depending on density, viscosity and temperature of the fluid, measures 2 times to 6 times the diameter (D) of the circle segment-like cross-section.

6. Body (10) according to one of the preceding claims, wherein the introduction section (18.1...18.3) is designed such that the inclination between the main flow direction (14) and the tangent parallel to the main flow direction is greater at a first point of the introduction section than at a second point which is placed upstream in the main flow direction with respect to the first point.

7. Body (10) according to one of the preceding claims, wherein the recess (16.2...16.3) has a first edge (20.2...20.3) placed upstream in the main flow direction (14) between the introduction section (18.2...18.3) and the recess (16.2...16.3) and a second edge (22.2...22.3) placed downstream in the main flow direction between the recess (16.2...16.3) and a part of the surface placed downstream, wherein the first edge (20.2...20.3) is offset with respect to the second edge (22.2...22.3) essentially in the direction of the interior of the body (10) in order to induce the fluid vortex (26.2...26.3) in the recess (16.2...16.3).

8. Body (10) according to claim 7, wherein the point of the recess (16.2...16.3) placed furthest upstream is offset with respect to the first edge (20.2...20.3) in the direction of the interior of the body (10) in order to localise the fluid vortex (26.2...26.3) essentially within the recess (16.2...16.3).

9. Body (10) according to claim 7 or 8, wherein the second edge (22.2...22.3) is offset with respect to a central point (M) of the recess (16.2...16.3) by 0.1 times to 0.6 times, preferably by 0.3 times, the radius of the circle segment-like cross-section in the main flow direction.

10. Body (10) according to claim 3 and one of claims 7 to 9, wherein the second edge (22.2...22.3) has a projection (23.2...23.3) inclined counter to the main flow direction and in the direction of the recess to carry the fluid vortex over to a subsequent recess.

11. Body (10) according to one of the preceding claims, wherein the arc of a circle section of the cross-section of the recess (16.2...16.3), depending on density, viscosity and temperature of the fluid, measures between 181° and 315°, preferably between 260° and 310°, and particularly preferably between 270° and 310°, so that the recess (16.2...16.3) is opened over an angle range of between 179° and 45°, preferably of between 100° and 75° of its cross-section.

12. Wind tunnel, in particular supersonic wind tunnel, having a body (10) according to one of claims 1 to 11.

13. Jet engine having a body (10) according to one of claims 1 to 11.

14. Lifting device having a body (10) according to one of claims 1 to 11.

15. Sheeting having a structure for reducing a flow resistance of a body over or around which a fluid can flow in a main flow direction (14), to the surface of which the sheeting can be applied, wherein the structure has at least one recess (16.1...16.3) for the induction of a fluid vortex (26.1...26.3), and has at least one introduction section (18.1...18.3) inclined with respect to the main flow direction (14) in the direction of the recess (16.1...16.3) and upstream of the recess (16.1...16.3) in the main flow direction (14) to introduce a fluid stream (24) into the recess (16.1...16.3), **characterised in that** the recess (16.1...16.3) has a circle segment-like cross-section and is designed so that a fluid vortex (26.1...26.3) is induced within the recess (16.1...16.3) by a fluid stream (14) passed over the surface (12), which recess is designed so that the fluid vortex remains essentially within the recess and forms air cushions, over which the further-flowing fluid stream (28) is passed.

16. Use of a surface structure over which a fluid can flow in a main flow direction having at least recess (16.1...16.3) for the induction of a fluid vortex (26.1...26.3) which has an introduction section (18.1...18.3) inclined with respect to the main flow direction and upstream of the recess in the main flow direction to introduce a fluid stream into the recess (16.1...16.3), **characterised in that** a surface structure with a provided recess of a circle segment-like cross-section is used to reduce a flow resistance of a body provided with the surface structure, wherein the recess is designed so that a fluid vortex (26.1...26.3) is induced within the recess (16.1...16.3) by a fluid stream (14) passed over the surface (12), which recess is designed so that the fluid vortex remains essentially within the recess and forms air cushions, over which the further-flowing fluid stream (28) is passed.

## Revendications

1. Corps (10) comprenant au moins une surface (12) pouvant être parcourue par un fluide (30) avec un écoulement global définissant une direction d'écoulement principale (14) sur la surface (12),
la surface (12) présentant au moins en partie une structure pour réduire la résistance à l'écoulement du corps (10), la structure présentant
au moins un évidement (16.1 ... 16.3) pour l'induction d'un tourbillon de fluide (26.1 ... 26.3) et
au moins une section d'introduction (18.1 ... 18.3) inclinée par rapport à la direction d'écoulement principale en direction de l'évidement (16.1 ... 16.3) et
logée en amont de l'évidement (16.1 ... 16.3) dans le sens de l'écoulement principal pour l'introduction d'un courant de fluide (24) dans l'évidement (16.1 ... 16.3),
**caractérisé en ce que** :
l'évidement (16.1 ... 16.3) présente une section transversale en forme de section circulaire et est ménagé de sorte qu'un tourbillon de fluide (26.1 ... 26.3) soit induit par un courant de fluide (14) guidé par la surface (12) dans l'évidement (16.1 ... 16.3), lequel évidement est conçu de sorte que le tourbillon de fluide reste sensiblement dans l'évidement et y forme des coussins d'air, par lesquels le courant de fluide (28) qui continue à s'écouler est guidé.

2. Corps (10) selon la revendication 1, dans lequel l'évidement (16.1 ... 16.3) est élargi sensiblement transversalement à la direction d'écoulement principale (14), en particulier en forme de rainure.

3. Corps (10) selon la revendication 1 ou 2, dans lequel la structure présente t une pluralité d'évidements (16.1 ... 16.3), les évidements (16.1 ... 16.3) de la pluralité étant agencés l'un derrière l' autre en particulier dans la direction d'écoulement principale (14).

4. Corps (10) selon la revendication 3, dans lequel des évidements contigus (16.1, 16.2 ; 16.2, 16.3) sont espacés l'un de l'autre de préférence de 1 fois à 6 fois, selon la densité, la viscosité et la température du fluide, du diamètre (D) de la section transversale en forme de section circulaire.

5. Corps (10) selon l'une quelconque des revendications précédentes, dans lequel la section d'introduction (18.1 ... 18.3) est conformée en ligne droite et/ou incurvée, dans lequel, en particulier, le rayon de courbure (R) mesure, selon la densité, la viscosité et la température du fluide, 2 à 6 fois le diamètre (D) de la section transversale en forme de section circulaire.

6. Corps (10) selon l'une quelconque des revendications précédentes, dans lequel la section d'introduction (18.1 ... 18.3) est conçue de telle manière que l'inclinaison entre la direction d'écoulement principale (14) et la tangente parallèle à la direction d'écoulement principale soit plus grande en un premier point de la section d'introduction qu'en un second point qui est placé en amont par rapport au premier point dans le sens d'écoulement principal.

7. Corps (10) selon l'une quelconque des revendications précédentes, dans lequel l'évidement (16.2 ... 16.3) présente une première arête (20.2 ... 20.3) placée en amont dans le sens d'écoulement principal (14) entre la section d'introduction (18.2 ... 18.3) et l'évidement (16.2 ... 16.3) et une seconde arête (22.2 ... 22.3) placée en aval dans le sens d'écoulement principal entre l'évidement (16.2 ... 16.3) et une partie placée en aval de la surface, la première arête (20.2 ... 20.3) étant décalée par rapport à la seconde arête (22.2 ... 22.3) sensiblement en direction de l'intérieur du corps (10) afin d'induire le tourbillon de fluide (26.2 ... 26.3) dans l'évidement (16.2 ... 16.3).

8. Corps (10) selon la revendication 7, dans lequel le point placé le plus loin en amont de l'évidement (16.2 ... 16.3) est décalé par rapport à la première arête (20.2 ... 20.3) en direction de l'intérieur du corps (10) afin de localiser le tourbillon de fluide (26.2 ... 26.3) sensiblement dans l'évidement (16.2 ... 16.3).

9. Corps (10) selon la revendication 7 ou 8, dans lequel la seconde arête (22.2 ... 22.3) est décalée par rapport à un point médian (M) de l'évidement (16.2 ... 16.3) de 0,1 fois à 0,6 fois, de préférence de 0,3 fois, le rayon de la section transversale en forme de section circulaire dans la direction d'écoulement principale.

10. Corps (10) selon la revendication 3 et l'une quelconque des revendications 7 à 9, dans lequel la section arête (22.2 ... 22.3) présente une saillie (23.2 ... 23.3) inclinée dans le sens inverse au sens d'écoulement principal et en direction de l'évidement pour faire passer le tourbillon de fluide à un évidement suivant.

11. Corps (10) selon l'une quelconque des revendications précédentes, dans lequel la section d'arc de cercle de la section transversale de l'évidement (16.2 ... 16.3) mesure, selon la densité, la viscosité et la température du fluide, entre 181° et 315°, de préférence entre 260° et 310°, et, de manière particulièrement préférée, entre 270° et 310°,
de sorte que l'évidement (16.2 ... 16.3) soit ouvert sur une plage angulaire entre 179° et 45°, de préférence entre 100° et 75° de sa section transversale.

12. Canal d'écoulement, en particulier canal d'écoulement supersonique avec un corps (10) selon l'une quelconque des revendications 1 à 11.

13. Moteur à réaction avec un corps (10) selon l'une quelconque des revendications 1 à 11.

14. Dispositif de portance avec un corps (10) selon l'une quelconque des revendications 1 à 11.

15. Film avec une structure pour réduire la résistance à l'écoulement d'un corps qui peut être parcouru par un fluide dans une direction d'écoulement principale (14), sur la surface duquel le film peut être appliqué, la structure
Présentant
au moins un évidement (16.1 ... 16.3) pour l'induction d'un tourbillon de fluide (26.1 ... 26.3) et présentant au moins une section d'introduction inclinée par rapport à la direction d'écoulement principale (14) en direction de l'évidement (16.1 ... 16.3) et logée en amont de l'évidement (16.1 ... 16.3) dans le sens d'écoulement principal (14) pour l'introduction d'un courant de fluide (24) dans l'évidement (16.1 ... 16.3),
**caractérisé en ce que** :
l'évidement (16.1 ... 16.3) présente une section transversale en forme de section circulaire et est ménagé de sorte qu'un tourbillon de fluide (26.1 ... 26.3) soit induit par un courant de fluide (14) guidé sur la surface (12) dans l'évidement (16.1 ... 16.3), lequel évidement est conçu de sorte que le tourbillon de fluide reste sensiblement dans l'évidement et forme des coussins d'air, par lesquels le courant de fluide (28) qui continue à s'écouler est guidé .

16. Utilisation d'une structure de surface qui peut être parcourue par un fluide dans une direction d'écoulement principale (16.1 ... 16.3) avec au moins un évidement (16.1 ... 16.3) pour l'induction d'un tourbillon de fluide (26.1 ... 26.3) qui présente une section d'introduction (18.1 ... 18.3) inclinée par rapport à la direction d'écoulement principale et logée en amont de l'évidement dans le sens d'écoulement principal pour l'introduction d'un courant de fluide dans l'évidement (16.1 ... 16.3),
**caractérisée en ce que** :
une structure de surface avec un évidement prévu d'une section transversale en forme de section circulaire est utilisée pour réduire la une résistance à l'écoulement (14) d'un corps pourvu de la structure de surface, l'évidement étant ménagé de sorte qu'un tourbillon de fluide (26.1 ... 26.3) soit induit par un courant de fluide guidé sur la surface (12) dans l'évidement (16.1 ... 16.3), lequel évidement est conçu de sorte que le tourbillon de fluide reste sensiblement dans l'évidement et forme des coussins d'air, par lesquels le courant de fluide (28) qui continue de s'écouler est guidé.
